(19) Europäisches Patentamt
European Patent Office
Office européen des brevets

(11) EP 4 815 142 A1

(12) **EUROPEAN PATENT APPLICATION**
published in accordance with Art. 153(4) EPC

(43) Date of publication:
**30.09.2026 Bulletin 2026/40**

(21) Application number: **24894728.5**

(22) Date of filing: **04.04.2024**

(51) International Patent Classification (IPC):
***H01M 50/242*** *(2021.01)* ***H01M 10/052*** *(2010.01)*

(52) Cooperative Patent Classification (CPC):
**H01M 10/052; H01M 50/242;** Y02E 60/10

(86) International application number:
**PCT/KR2024/095668**

(87) International publication number:
**WO 2025/110838 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.11.2023 KR 20230162446**

(71) Applicant: **SAMSUNG SDI CO., LTD.**
**Yongin-si, Gyeonggi-do 17084 (KR)**

(72) Inventors:
- **CHO, Ik Hwan**
  **Yongin-si, Gyeonggi-do 17084 (KR)**
- **YOU, Jiwan**
  **Yongin-si, Gyeonggi-do 17084 (KR)**
- **WOO, Changhee**
  **Yongin-si, Gyeonggi-do 17084 (KR)**
- **RYU, Young Gyoon**
  **Yongin-si, Gyeonggi-do 17084 (KR)**

(74) Representative: **Michalski Hüttermann & Partner mbB**
**Kaistraße 16A**
**40221 Düsseldorf (DE)**

(54) **ALL-SOLID RECHARGEABLE BATTERY**

(57) An all-solid rechargeable battery according to an embodiment includes a plurality of all-solid cells in which a unit cell including a positive electrode, a solid electrolyte layer, and a negative electrode and a first elastic member are stacked; a second elastic member disposed between the adjacent all-solid cells; an outer body accommodating the plurality of all-solid cells and the second elastic member; and a third elastic member disposed between an outermost all-solid cell disposed at an outermost end of the plurality of all-solid cells and the outer body, wherein compressive strengths of the first elastic member and the second elastic member are different from each other.

FIG. 3

A
410
310
T3
T1
120
113
112
111
110
110t
130
T2
200
300
320
400
420
Z
Y
X



Processed by Luminess, 75001 PARIS (FR)

## Description

[**Technical Field**]

The present disclosure relates to an all-solid rechargeable battery.

[**Background Art**]

Recently, as the risk of explosion in batteries using liquid electrolytes has been reported, development of all-solid rechargeable batteries is being conducted. An all-solid rechargeable battery is a battery in which all materials are made of solid, and refers to a battery in which a solid electrolyte is used. The all-solid rechargeable battery has advantages in that the battery is safe because there is no risk of explosion due to electrolyte leakage, is easy to manufacture as a thin battery, has a high energy density, and is capable of implementing large capacity.

[**Disclosure**]

[Technical Problem]

Embodiments attempt to provide an all-solid rechargeable battery that may prevent damage to a solid electrolyte layer by uniformly pressurizing the solid electrolyte layer and prevent short circuits between a positive electrode and a negative electrode, thereby reducing a defect rate and improving performance.

[Technical Solution]

An all-solid rechargeable battery according to an embodiment includes a plurality of all-solid cells in which a unit cell including a positive electrode, a solid electrolyte layer, and a negative electrode and a first elastic member are stacked; a second elastic member disposed between the adjacent all-solid cells; an outer body accommodating the plurality of all-solid cells and the second elastic member; and a third elastic member disposed between an outermost all-solid cell disposed at an outermost end of the plurality of all-solid cells and the outer body, wherein compressive strengths of the first elastic member and the second elastic member are different from each other.

The compressive strengths of the first elastic member, the second elastic member, and the third elastic member may be different from each other.

When a compressive strength of the first elastic member is P1, a compressive strength of the second elastic member is P2, and a compressive strength of the third elastic member is P3, $P1 < P2 < P3$ may be satisfied.

When a magnitude of resilience of the first elastic member is R1, a magnitude of resilience of the second elastic member is R2, and a magnitude of resilience of the third elastic member is R3, $R1 < R2 < R3$ may be satisfied.

When a thickness of the first elastic member is T1, a thickness of the second elastic member is T2, and a thickness of the third elastic member is T3, $T1 < T2 < T3$ may be satisfied.

The second elastic member and the third elastic member may have adhesive properties.

The first elastic member may have heat dissipation properties, and the second elastic member and the third elastic member may have insulation properties.

The compressive strengths of the second elastic member and the third elastic member may be the same.

The all-solid cell may further include a pouch member that accommodates the unit cell and the first elastic member.

[Advantageous Effects]

According to the embodiments, by including the first elastic member alternately stacked with the unit cells, the second elastic member disposed between the all-solid cells, and the third elastic member disposed between the outermost all-solid cells and the outer body and by differently adjusting the compressive strengths of the first elastic member, the second elastic member, and the third elastic member, it is possible to uniformly apply the pressure to the solid electrolyte layer when the all-solid cell is pressurized. Therefore, damage to the solid electrolyte layer may be prevented by minimizing the stress applied to the solid electrolyte layer.

Therefore, the short circuit between the positive and negative electrodes disposed on both sides of the solid electrolyte layer may be prevented, so that the defect rate of the all-solid rechargeable battery may be reduced and the performance may be improved.

In addition, by uniformly applying the pressure to the solid electrolyte layer when the all-solid cell is pressurized, the discharge efficiency may be improved.

[**Description of the Drawings**]

FIG. 1 illustrates a cross-sectional view of an all-solid battery.
FIG. 2 illustrates a cross-sectional view of an all-solid battery including a precipitation-type negative electrode.
FIG. 3 illustrates a cross-sectional view of an all-solid rechargeable battery according to an embodiment.
FIG. 4 illustrates an enlarged cross-sectional view of portion "A" of FIG. 3.

[**Mode for Invention**]

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present disclosure.

In addition, unless explicitly stated to the contrary, the word "comprise" and variations such as "comprises" and "comprising" should be understood to imply the inclusion of stated elements but not the exclusion of any other elements.

In the drawings, the thicknesses of layers, films, panels, areas, regions, and the like are exaggerated for clarity, and like reference numerals designate like elements throughout the specification. It will be understood that when an element such as a layer, film, region, area or substrate is referred to as being "on" or "above" another element, it may be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Here, "or" is not to be construed as an exclusive meaning, and for example, "A or B" is construed to include A, B, A+B, and the like.

Positive Electrode for All-Solid Rechargeable Battery

In an embodiment, there is provided a positive electrode for an all-solid rechargeable battery including a current collecting layer and a positive electrode active material layer positioned on the current collecting layer, wherein the positive electrode active material layer includes at least one of a positive electrode active material, a sulfide-based solid electrolyte, a binder, and a conductive material. However, the present disclosure is not limited thereto, and the positive electrode for the all-solid rechargeable battery may include more or less components than the above-described components.

In the embodiment, the positive electrode for the all-solid rechargeable battery is manufactured by applying a positive electrode composition including at least one of a positive electrode active material, a sulfide-based solid electrolyte, a binder, and a conductive material to a current collecting layer, followed by drying and roll-pressing.

Positive Electrode Active Material

The positive electrode active material may be applied without limitation as long as it is generally used in all-solid rechargeable batteries. For example, the positive electrode active material may be a compound capable of reversible intercalation and deintercalation of lithium, and may include a compound represented by any one of the following chemical formulas.

$Li_aA_{1-b}X_bD_2$ ($0.90 \leq a \leq 1.8$, $0 \leq b \leq 0.5$);
$Li_aA_{1-b}X_bO_{2-c}D_c$ ($0.90 \leq a \leq 1.8$, $0 \leq b \leq 0.5$, $0 \leq c \leq 0.05$);
$Li_aE_{1-b}X_bO_{2-c}D_c$ ($0.90 \leq a \leq 1.8$, $0 \leq b \leq 0.5$, $0 \leq c \leq 0.05$);
$Li_aE_{2-b}X_bO_{4-c}D_c$ ($0.90 \leq a \leq 1.8$, $0 \leq b \leq 0.5$, $0 \leq c \leq 0.05$);
$Li_aNi_{1-b-c}Co_bX_cD_\alpha$ ($0.90 \leq a \leq 1.8$, $0 \leq b \leq 0.5$, $0 \leq c \leq 0.5$, $0 < \alpha \leq 2$);
$Li_aNi_{1-b-c}Co_bX_cO_{2-\alpha}T_\alpha$ ($0.90 \leq a \leq 1.8$, $0 \leq b \leq 0.5$, $0 \leq c \leq 0.05$, $0 < \alpha < 2$);
$Li_aNi_{1-b-c}Co_bX_cO_{2-\alpha}T_2$ ($0.90 \leq a \leq 1.8$, $0 \leq b \leq 0.5$, $0 \leq c \leq 0.05$, $0 < \alpha < 2$);
$Li_aNi_{1-b-c}Mn_bX_cD_\alpha$ ($0.90 \leq a \leq 1.8$, $0 \leq b \leq 0.5$, $0 \leq c \leq 0.05$, $0 < \alpha \leq 2$);
$Li_aNi_{1-b-c}Mn_bX_cO_{2-\alpha}T_\alpha$ ($0.90 \leq a \leq 1.8$, $0 \leq b \leq 0.5$, $0 \leq c \leq 0.05$, $0 < \alpha < 2$);
$Li_aNi_{1-b-c}Mn_bX_cO_{2-\alpha}T_2$ ($0.90 \leq a \leq 1.8$, $0 \leq b \leq 0.5$, $0 \leq c \leq 0.05$, $0 < \alpha < 2$);
$Li_aNi_bE_cG_dO_2$ ($0.90 \leq a \leq 1.8$, $0 \leq b \leq 0.9$, $0 \leq c \leq 0.5$, $0.001 \leq d \leq 0.1$);
$Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$);
$Li_aNiG_bO_2$ ($0.90 \leq a \leq 1.8$, $0.001 \leq b \leq 0.1$);
$Li_aCoG_bO_2$ ($0.90 \leq a \leq 1.8$, $0.001 \leq b \leq 0.1$);
$Li_aMn_{1-b}G_bO_2$ ($0.90 \leq a \leq 1.8$, $0.001 \leq b \leq 0.1$);

$Li_aMn_2G_bO_4$ ($0.90 \le a \le 1.8$, $0.001 \le b \le 0.1$);
$Li_aMn_{1-g}G_gPO_4$ ($0.90 \le a \le 1.8$, $0 \le g \le 0.5$);
$QO_2$; $QS_2$; $LiQS_2$;
$V_2O_5$; $LiV_2O_5$;
$LiZO_2$;
$LiNiVO_4$;
$Li_{(3-f)}J_2\ PO_{43}$ ($0 \le f \le 2$);
$Li_{(3-f)}Fe_2\ PO_{43}$ ($0 \le f \le 2$);
$Li_aFePO_4$ ($0.90 \le a \le 1.8$).

In the above chemical formulas, A is selected from the group consisting of Ni, Co, Mn, and a combination thereof, X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive electrode active material may include a lithium nickel-based oxide represented by Chemical Formula 1 below, a lithium cobalt-based oxide represented by Chemical Formula 2 below, a lithium ferrous phosphate-based compound represented by Chemical Formula 3 below, or a combination thereof.

[Chemical Formula 1] $Li_{a1}Ni_{x1}M^1_{y1}M^2_{1-x1-y1}O_2$

In Chemical Formula 1, $0.9 \le a1 \le 1.8$, $0.3 \le x1 \le 1$, $0 \le y1 \le 0.7$, and M1 and M2 are each one or more elements independently selected from the group consisting of Al, B, Ba, Ca, Ce, Co, Cr, Cu, F, Fe, Mg, Mn, Mo, Nb, P, S, Si, Sr, Ti, V, W, and Zr.

[Chemical Formula 2] $Li_{a2}Co_{x2}M^3_{1-x2}O_2$

In Chemical Formula 2, $0.9 \le a2 \le 1.8$, $0.6 \le x2 \le 1$, and M3 is one or more elements selected from the group consisting of Al, B, Ba, Ca, Ce, Cr, Cu, F, Fe, Mg, Mn, Mo, Nb, P, S, Si, Sr, Ti, V, W, and Zr.

[Chemical Formula 3] $Li_{a3}Fe_{x3}M^4_{1-x3}PO_4$

In Chemical Formula 3, $0.9 \le a3 \le 1.8$, $0.6 \le x3 \le 1$, and M4 is one or more elements selected from the group consisting of Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive electrode active material may be 1 μm to 25 μm, for example, 3 μm to 25 μm, 5 μm to 25 μm, 5 μm to 20 μm, 8 μm to 20 μm, or 10 μm to 18 μm. The positive electrode active material having the particle diameter range may be harmoniously mixed with other components in the positive electrode active material layer and may implement the high capacity and high energy density.

The positive electrode active material may be in the form of a secondary particle made by agglomeration of a plurality of primary particles, or may be in the form of a single particle. In addition, the positive electrode active material may be spherical or close to a spherical shape, or may be polyhedral or amorphous.

Sulfide-Based Solid Electrolyte

The sulfide-based solid electrolyte may include, for example, $Li_2S-P_2S_5$, $Li_2S-P_2S_5-LiX$ (X is a halogen element, for example I, or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are each an integer, and Z is Ge, Zn, or Ga), $Li_2S-GeS_2$, $Li_2S-SiS_2-Li_3PO_4$, $Li_2S-SiS_2-Li_pMO_q$ (p and q are integers, and M is P, Si, Ge, B, Al, Ga, or In), or a combination thereof.

The sulfide-based solid electrolyte may be obtained by, for example, mixing $Li_2S$ and $P_2S_5$ at a molar ratio of 50:50 to 90:10 or 50:50 to 80:20 and optionally heat treating the mixture. Within the above mixing ratio range, the sulfide-based solid electrolyte having excellent ionic conductivity may be manufactured. Here, $SiS_2$, $GeS_2$, $B_2S_3$, and the like as

other components may be further included to further improve the ionic conductivity.

A mechanical milling or solution method may be applied as a method of mixing sulfur-containing raw materials to prepare the sulfide-based solid electrolyte. The mechanical milling is a method of particulating and mixing starting materials by putting the starting materials, a ball mill, and the like in a reactor and stirring strongly the mixture. When using the solution method, the solid electrolyte may be obtained as a precipitate by mixing the starting materials in a solvent. In addition, when heat treatment is performed after mixing, crystals of the solid electrolyte may become more robust and the ionic conductivity may be improved. As an example, the sulfide-based solid electrolyte may be prepared by mixing sulfur-containing raw materials and heat-treating the sulfur-containing raw materials twice. In this case, the sulfide-based solid electrolyte having high ionic conductivity and robustness may be prepared.

As an example, the sulfide-based solid electrolyte particles may contain argyrodite type sulfide. The azirodite type sulfide may be expressed by, for example, $Li_aM_bP_cS_dA_e$ (a, b, c, d, and e all are 0 or more to 12 or less, M is Ge, Sn, Si, or a combination thereof, A is F, Cl, Br, or I), and as a specific example, may be expressed by Chemical Formula of $Li_{7-x}PS_{6-x}A_x$ (x is 0.2 or more and 1.8 or less, and A is F, Cl, Br, or I). The azirodite type sulfide may specifically be $Li_3PS_4$, $Li_7P_3S_{11}$, $Li_7PS_6$, $Li_6PS_5Cl$, $Li_6PS_5Br$, $Li_{5.8}PS_{4.8}Cl_{1.2}$, $Li_{6.2}PS_{5.2}Br_{0.8}$ , or the like.

The sulfide-based solid electrolyte particles containing such azirodite type sulfide may have high ionic conductivity close to the range of $10^{-4}$ to $10^{-2}$ S/cm, which is ionic conductivity of a typical liquid electrolyte at room temperature, and may form a tight bond between the positive electrode active material and the solid electrolyte without causing the decrease in the ion conductivity, and further form a tight interface between the electrode layer and the solid electrolyte layer. The all-solid rechargeable battery containing this may improve the performance of the battery such as rate characteristics, coulombic efficiency, and lifespan characteristics.

The ajirodite type sulfide-based solid electrolyte may be prepared by, for example, mixing lithium sulfide, phosphorus sulfide, and optionally lithium halide. After mixing them, the heat treatment may be performed. The heat treatment may include, for example, two or more heat treatment steps.

The average particle size D50 of the sulfide-based solid electrolyte particles according to an embodiment may be 5.0 μm or less and may be, for example, 0.1 μm to 5.0 μm, 0.1 μm to 4.0 μm, 0.1 μm to 3.0 μm, 0.5 μm to 2.0 μm, or 0.1 μm to 1.5 μm. Alternatively, the sulfide-based solid electrolyte particles may be small particles having the average particle size D50 of 0.1 μm to 1.0 μm depending on the location or purpose of use, or may be large particles having an average particle size D50 of 1.5 μm to 5.0 μm. The sulfide-based solid electrolyte particles in this particle size range may effectively penetrate between the solid particles in the battery, and have excellent contactability with the electrode active material and the connectivity between the solid electrolyte particles. The average particle size of the sulfide-based solid electrolyte particles may be measured using a microscope image. For example, the particle size distribution may be obtained by measuring the size of about 20 particles in a scanning electron microscope image, and the D50 may be calculated from the particle size distribution.

The content of the solid electrolyte in the positive electrode for the all-solid rechargeable battery may be 0.5 wt% to 35 wt% and may be, for example, 1 wt% to 35 wt%, 5 wt% to 30 wt%, and 8 wt% to 25 wt%, or 10 wt% to 20 wt%. This is the content relative to the total weight of the components in the positive electrode, and specifically, may be the content relative to the total weight of the positive electrode active material layer.

In the embodiment, the positive electrode active material layer contains 50 wt% to 99.35 wt% of positive electrode active material, 0.5 wt% to 35 wt% of sulfide-based solid electrolyte, and 0.1 wt% to 10 wt% of fluorinated resin binder, and 0.05 wt% to 5 wt% of vanadium oxide, based on 100 wt% of positive electrode active material layer. When this content range is satisfied, the positive electrode for the all-solid rechargeable battery maintains the high adhesion while maintaining the high capacity and high ionic conductivity, and maintains the viscosity of the positive electrode composition at an appropriate level, thereby improving the processability.

## Binder

The binder serves to appropriately bind positive electrode active material particles to each other and appropriately bind the positive electrode active material to the current collecting layer. As a representative example of the binder, polyvinylalcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, nylon, or the like, may be used, but the binder is not limited thereto.

## Conductive Material

The positive electrode active material layer may further include a conductive material. The conductive material is used to provide conductivity to an electrode, and may include, for example, a carbon-based material such as natural graphite, artificial graphite, carbon black, acetylene black, Ketjen black, a carbon fiber, and a carbon nanotube; a metal-

based material in the form of metal powder or metal fiber containing copper, nickel, aluminum, silver, and the like; a conductive polymer such as a polyphenylene derivative; or a combination thereof.

The conductive material may be included in an amount of 0.1 wt% to 5 wt%, or 0.1 wt% to 3 wt% with respect to a total weight of each component of the positive electrode for an all-solid battery, or with respect to the total weight of the first positive electrode active material layer. Within the above content range, the conductive material may improve electrical conductivity without deteriorating battery performance.

When the positive electrode active material layer further includes a conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorine-based resin binder, 0.05 wt% to 5 wt% of the vanadium oxide, and 0.1 wt% to 5 wt% of the conductive material with respect to 100 wt% of the positive electrode active material layer.

Meanwhile, the positive electrode for a lithium rechargeable battery may further include an oxide-based inorganic solid electrolyte, in addition to the solid electrolyte described above. The oxide-based inorganic solid electrolyte may include, for example, $Li_{1+x}Ti_{2-x}Al PO_{43}$(LTAP) ($0\leq x\leq 4$), $Li_{1+x+y}Al_xTi_{2-x}Si_yP_{3-y}O_{12}$ ($0<x<2$, $0\leq y<3$), $BaTiO_3$, $Pb(Zr,Ti)O_3$ (PZT), $Pb_{1-x}La_xZr_{1-y}Ti_yO_3$(PLZT) ($0\leq x<1$, $0\leq y<1$), PB $(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, lithium phosphate ($Li_3PO_4$), lithium titanium phosphate ($Li_xTi_y PO_{43}$, $0<x<2$, $0<y<3$), $Li_{1+x+y}(Al, Ga)_x(Ti, Ge)_{2-x}Si_yP_{3-y}O_{12}$ ($0\leq x\leq 1$, $0\leq y\leq 1$), lithium lanthanum titanate ($Li_xLa_yTiO_3$, $0<x<2$, $0<y<3$), $Li_2O$, $LiAlO_2$, $Li_2O$-$Al_2O_3$-$SiO_2$-$P_2O_5$-$TiO_2$-$GeO_2$-based ceramics, garnet-based ceramics $Li_{3+x}La_3M_2O_{12}$ (M= Te, Nb, or Zr; x is an integer from 1 to 10), or a combination thereof.

All-Solid Rechargeable Battery

An embodiment provides an all-solid rechargeable battery including the positive electrode described above, a negative electrode, and a solid electrolyte layer disposed between the positive electrode and the negative electrode. The all-solid rechargeable battery may be referred to as an all-solid battery or an all-solid lithium rechargeable battery.

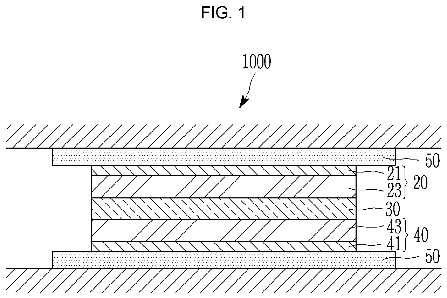

FIG. 1 illustrates a cross-sectional view of an all-solid battery.

Referring to FIG. 1, an all-solid battery 1000 may have a structure in which an electrode assembly in which a negative electrode 40 including a negative electrode current collecting layer 41 and a negative electrode active material layer 43, a solid electrolyte layer 30, and a positive electrode 20 including a positive electrode active material layer 23 and a positive electrode current collecting layer 21 are stacked is accommodated in a case such as a pouch. The all-solid battery 1000 may further include an elastic layer 50 on an outer side of at least one of the positive electrode 20 and the negative electrode 40. Although FIG. 1 shows one electrode assembly including the negative electrode 40, the solid electrolyte layer 30, and the positive electrode 20, an all-solid battery may be manufactured by stacking two or more electrode assemblies.

Negative Electrode

The negative electrode for an all-solid battery may include, for example, a current collecting layer and a negative electrode active material layer disposed on the current collecting layer. The negative electrode active material layer includes a negative electrode active material and may further include a binder, a conductive material, and/or a solid electrolyte.

The negative electrode active material may include a material capable of reversibly intercalation/deintercalating lithium ions, lithium metal, an alloy of lithium metal, a material capable of being doped and undoped on lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include soft carbon or hard carbon, mesophase pitch carbide, fired coke, and the like.

For the alloy of the lithium metal, an alloy of lithium and one or more metal selected from Na, K, Rb, Cs, Fr, Be, Mg, Ca, Sr, Si, Sb, Pb, In, Zn, Ba, Ra, Ge, Al and Sn may be used

For the material capable of being doped or undoped on the lithium, a Si-based negative electrode active material or an Sn-based negative electrode active material may be used. Examples of the Si-based negative electrode active material may include silicon, silicon-carbon composite, $SiO_x$ ($0<x<2$), and a Si-Q alloy (Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative electrode active material may include Sn, $SnO_2$, a Sn-R alloy (R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof

and $SiO_2$ may be used. The elements Q and R may be selected and used from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and a silicon particle and an amorphous carbon coating layer positioned on a surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resin such as phenol resin, furan resin, and polyimide resin may be used. In this case, a content of silicon may be 10 wt% to 50 wt% with respect to a total weight of the silicon-carbon composite. In addition, a content of the crystalline carbon may be 10 wt% to 70 wt% with respect to the total weight of the silicon-carbon composite, and a content of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particle may be 10 nm to 20 $\mu$m, and for example, 10 nm to 500 nm. The silicon particle may be present in an oxidized form, and in this case, an atomic content ratio of Si:O in the silicon particle, which indicates a degree of oxidation, may be 99:1 to 33:67. The silicon particle may be a $SiO_x$ particle, in which case a range of x in $SiO_x$ may be greater than 0 and less than 2. Here, the average particle diameter (D50) is measured with a particle size analyzer using a laser diffraction method and refers to a diameter of a particle with a cumulative volume of 50% by volume in the particle size distribution.

The Si-based negative electrode active material or Sn-based negative electrode active material may be used by mixing with a carbon-based negative electrode active material. A mixing ratio of the Si-based negative electrode active material or Sn-based negative electrode active material and the carbon-based negative electrode active material may be 1:99 to 90:10 at a weight ratio.

The content of the negative electrode active material in the negative electrode active material layer may be 95 wt% to 99 wt% with respect to the total weight of the negative electrode active material layer.

In an exemplary embodiment, the negative electrode active material layer further includes a binder, and optionally, may further include a conductive material. A content of the binder in the negative electrode active material layer may be 1 wt% to 5 wt% with respect to the total weight of the negative electrode active material layer. In addition, when a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other well and also to adhere the negative electrode active material to the current collecting layer well. The binder may include a water-insoluble binder, a water-soluble binder, or a combination thereof.

Examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of the water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluoro rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, alkali metal salts thereof, or a combination thereof. As the alkali metal, Na, K, or Li may be used. An amount of the thickener used may be 0.1 to 3 parts by weight with respect to 100 parts by weight of the negative electrode active material.

The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber including copper, nickel, aluminum, silver, and the like; a conductive polymer such as a polyphenylene derivative; or a mixture thereof.

The negative electrode current collecting layer may include one selected from a copper foil, a nickel foil, a stainless steel foil, a titanium foil, a nickel foam, a copper foam, a polymer substrate coated with a conductive metal, and a combination thereof.

As another example, the negative electrode for the all-solid battery may be a precipitation-type negative electrode. The precipitation-type negative electrode refers to a negative electrode which does not include a negative electrode active material during assembling of a battery but in which lithium metal or the like is precipitated during charging of the battery and serves as a negative electrode active material.

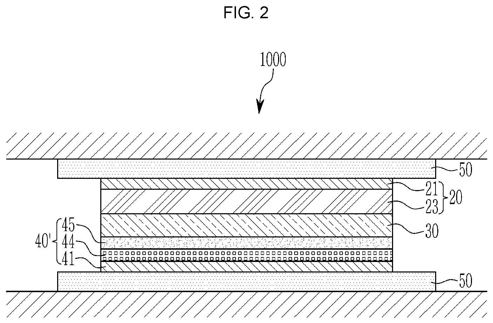

FIG. 2 illustrates a cross-sectional view of an all-solid battery including a precipitation-type negative electrode.

Referring to FIG. 2, a precipitation-type negative electrode 40' may include a current collecting layer 41 and a negative electrode coating layer 45 disposed on the current collecting layer 41. In an all-solid battery having the precipitation-type negative electrode 40', initial charging begins in the absence of a negative electrode active material, and during the charging, lithium metal with a high density or the like is precipitated between the current collecting layer 41 and the negative electrode coating layer 45 and forms a lithium metal layer 44, which may serve as a negative electrode active material. Accordingly, in an all-solid battery that has been charged once or more, the precipitation-type negative electrode 40' may include the current collecting layer 41, the lithium metal layer 44 disposed on the current collecting layer 41, and the negative electrode coating layer 45 disposed on the metal layer. The lithium metal layer 44 refers to a layer of lithium metal or the like precipitated during the charging process of the battery and may be called a metal layer or a negative electrode active material layer.

The negative electrode coating layer 45 may include metal, a carbon material, or a combination thereof that serves as a catalyst.

The metal may include, for example, gold, platinum, palladium, silicon, silver, aluminum, bismuth, tin, zinc, or a combination thereof, and may be composed of one selected therefrom or an alloy of more than one thereof. When the metal is present in the form of a particle, an average particle diameter (D50) thereof may be about 4 $\mu$m or less, for example, 10 nm to 4 $\mu$m.

The carbon material may be, for example, crystalline carbon, amorphous carbon, or a combination thereof. The crystalline carbon may be, for example, natural graphite, artificial graphite, a mesophase carbon microbead, or a combination thereof. The amorphous carbon may be, for example, carbon black, activated carbon, acetylene black, Denka black, Ketjen black, or a combination thereof.

When the negative electrode coating layer 45 includes both the metal and the carbon material, a mixing ratio of the metal and the carbon material may be, for example, 1:10 to 2:1 at a weight ratio. In this case, the precipitation of lithium metal may be effectively promoted and the characteristics of the all-solid battery may be improved. The negative electrode coating layer 45 may include, for example, a carbon material on which catalyst metal is supported, or a mixture of metal particles and carbon material particles.

The negative electrode coating layer 45 may include, for example, the metal and amorphous carbon, and in this case, the precipitation of lithium metal may be effectively promoted.

The negative electrode coating layer 45 may further include a binder, and the binder may be a conductive binder. Furthermore, the negative electrode coating layer 45 may further include general additives such as a filler, a dispersant, and an ion conductive material.

A thickness of the negative electrode coating layer 45 may be, for example, 100 nm to 20 $\mu$m, 500 nm to 10 $\mu$m, or 1 $\mu$m to 5 $\mu$m.

For example, the precipitation-type negative electrode 40' may further include a thin film on the surface of the current collecting layer 41, that is, between the current collecting layer 41 and the negative electrode coating layer. The thin film may contain an element that may form an alloy with lithium. The element that may form an alloy with lithium may be, for example, gold, silver, zinc, tin, indium, silicon, aluminum, bismuth, and the like, which may be used alone or as an alloy of more than one thereof. The thin film may further planarize a precipitation shape of the lithium metal layer 44 and further improve the characteristics of the all-solid battery. The thin film may be formed by, for example, a vacuum deposition method, a sputtering method, a plating method, or the like. The thin film may have, for example, a thickness ranging from 1 nm to 500 nm.

Solid Electrolyte Layer

The solid electrolyte layer 30 may include a sulfide-based solid electrolyte, an oxide-based solid electrolyte, and the like. The specific description of the sulfide-based solid electrolyte and the oxide-based solid electrolyte are the same as above.

In one example, the solid electrolyte included in the positive electrode 20 and the solid electrolyte included in the solid electrolyte layer 30 may include the same compound or different compounds. For example, when both the positive electrode 20 and the solid electrolyte layer 30 include an argyrodite-type sulfide-based solid electrolyte, the overall performance of the all-solid rechargeable battery may be improved. In addition, as an example, when both the positive electrode 20 and the solid electrolyte layer 30 include the coated solid electrolyte described above, the all-solid rechargeable battery may implement excellent initial efficiency and life characteristics while implementing a high capacity and a high energy density.

Meanwhile, the average particle diameter (D50) of the solid electrolyte included in the positive electrode 20 may be smaller than the average particle diameter (D50) of the solid electrolyte included in the solid electrolyte layer 30. In this case, the overall performance may be improved by maximizing the energy density of the all-solid battery and increasing the mobility of lithium ions. For example, the average particle diameter (D50) of the solid electrolyte included in the positive

electrode 20 may be 0.1 μm to 1.0 μm, or 0.1 μm to 0.8 μm, and the average particle diameter (D50) of the solid electrolyte included in the solid electrolyte layer 30 may be 1.5 μm to 5.0 μm, 2.0 μm to 4.0 μm, or 2.5 μm to 3.5 μm. When the above particle diameter ranges are satisfied, the energy density of the all-solid rechargeable battery is maximized and the transfer of lithium ions is facilitated, making it possible to suppress resistance and thus to improve the overall performance of the all-solid rechargeable battery. Here, the average particle diameter (D50) of the solid electrolyte may be measured with a particle size analyzer using a laser diffraction method. Alternatively, a particle size distribution may be obtained by measuring sizes of about 20 particles selected from a microscope image such as a scanning electron microscope, and a D50 value may be calculated from the particle size distribution.

The solid electrolyte layer may further include a binder, in addition to the solid electrolyte. In this case, for the binder, a styrene butadiene rubber, polytetrafluoroethylene, polyvinylidene fluoride, polyethylene, an acrylate-based polymer, or a combination thereof may be used, but the present invention is not limited thereto, and any binder used in the art may be used. The acrylate-based polymer may be, for example, butyl acrylate, polyacrylate, polymethacrylate, or a combination thereof.

The solid electrolyte layer may be formed by adding a solid electrolyte to a binder solution, coating a base film with the solution, and drying the resultant. The solvent for the binder solution may be isobutyryl isobutyrate, xylene, toluene, benzene, hexane, or a combination thereof. A process of forming the solid electrolyte layer is widely known in the art, and therefore, a detailed description will be omitted.

A thickness of the solid electrolyte layer may be, for example, 10 μm to 150 μm.

The solid electrolyte layer may further include an alkali metal salt, and/or an ionic liquid, and/or a conductive polymer.

The alkali metal salt may be, for example, a lithium salt. A content of the lithium salt in the solid electrolyte layer may be 1 M or more, for example, 1 M to 4 M. In this case, the lithium salt may improve ionic conductivity by improving lithium ion mobility in the solid electrolyte layer.

The lithium salt may include, for example, LiSCN, $LiN(CN)_2$, $Li(CF_3SO_2)_3C$, $LiC_4F_9SO_3$, $LiN(SO_2CF_2CF_3)_2$, LiCl, LiF, LiBr, LiI, $LiB(C_2O_4)_2$, $LiBF_4$, $LiBF_3(C_2F_5)$, lithium bis(oxalato) borate (LiBOB), lithium oxalyldifluoroborate (LIODFB), lithium difluoro(oxalato)borate (LiDFOB), lithium bis(trifluoro methanesulfonyl)imide, LiTFSI, $LiN(SO_2CF_3)_2$), lithium bis(fluorosulfonyl)imide LiFSI, $LiN(SO_2F)_2$), $LiCF_3SO_3$, $LiAsF_6$, $LiSbF_6$, $LiClO_4$, or a mixture thereof.

Furthermore, the lithium salt may be an imide-based salt. For example, the imide-based lithium salt may include lithium bis(trifluoro methanesulfonyl)imide, LiTFSI, $LiN(SO_2CF_3)_2$), lithium bis(fluorosulfonyl)imide, LiFSI, $LiN(SO_2F)_2$). The lithium salt may maintain or improve ionic conductivity by appropriately maintaining chemical reactivity with an ionic liquid.

The ionic liquid refers to a salt or a room temperature molten salt that has a melting point equal to or lower than a room temperature, is in a liquid state at room temperature and is composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations and a mixture thereof, and b) $BF_4$-, $PF_6$-, $AsF_6$-, $SbF_6$-, $AlCl_4$-, $HSO_4$-, $ClO_4$-, $CH_3SO_3$-, $CF_3CO_2$-, Cl-, Br-, I-, $BF_4$-, $SO_4$-, $CF_3SO_3$-, $(FSO_2)_2N$-, $(C_2F_5SO_2)2N$-, $(C_2F_5SO_2)(CF_3SO_2)N$-, and $(CF_3SO_2)_2N$-.

The ionic liquid may be, for example, one or more selected from the group consisting of N-methyl-N-propyl-pyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl) amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer that satisfies the above ranges may maintain or improve ionic conductivity by improving the electrochemical contact area with the electrode. Accordingly, the energy density, discharge capacity, rate characteristics, and the like of the all-solid battery may be improved.

The all-solid battery may include a unit cell having a structure of a positive electrode/a solid electrolyte layer/a negative electrode, a bi-cell structure having a structure of a positive electrode/a solid electrolyte layer/a negative electrode/a solid electrolyte layer/a positive electrode, or a stacked battery in which a structure of a unit battery is repeated.

A shape of the all-solid battery is not particularly limited, and may be, for example, a coin shape, a button shape, a sheet shape, a stack shape, a cylindrical shape, a flat shape, or the like. In addition, the all-solid battery may also be applied to large-sized batteries used in electric vehicles, and the like. For example, the all-solid battery may also be used in a hybrid vehicle such as a plug-in hybrid electric vehicle (PHEV). Furthermore, it may be used in fields that require a large amount of power storage, and for example, may also be used to an electric bicycle, an electric tool or the like.

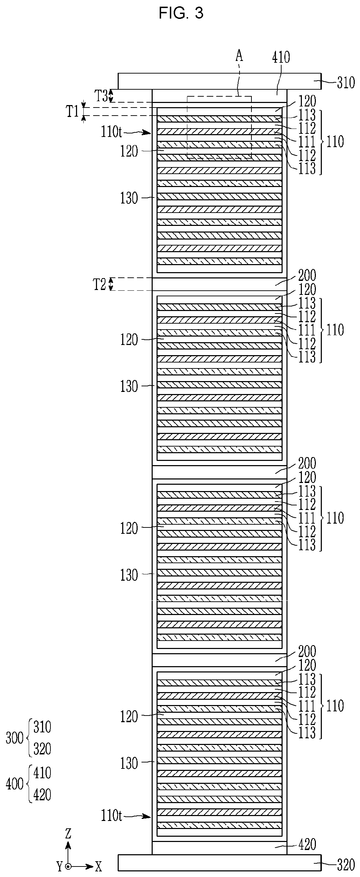

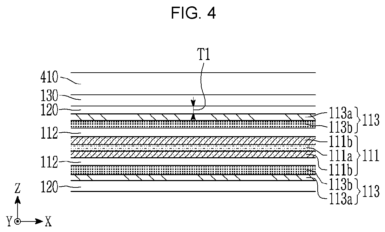

Hereinafter, an all-solid rechargeable battery according to an embodiment will be described with reference to FIG. 3 and FIG. 4.

FIG. 3 illustrates a cross-sectional view of an all-solid rechargeable battery according to an embodiment, and

FIG. 4 illustrates an enlarged cross-sectional view of portion "A" of FIG. 3.

As shown in FIG. 3 and FIG. 4, an all-solid rechargeable battery according to an embodiment is a rechargeable battery that may be charged and discharged, and includes a plurality of all-solid cells 100, a second elastic member 200, an outer body 300, and a third elastic member 400.

One all-solid cell 100 may include a plurality of unit cells 110, a plurality of first elastic members 120, and a pouch member 130. The unit cell 110 and the first elastic member 120 may be alternately stacked. Here, the unit cell 110 may include a positive electrode 111, a solid electrolyte layer 112, and a negative electrode 113. Here, the positive electrode 111 may include a cathode, and the negative electrode 113 may include an anode.

In the embodiment illustrated in FIG. 3, a structure in which four unit cells 110 and five first elastic members 120 are stacked is illustrated, but the present disclosure is not necessarily limited thereto, and various numbers of unit cells may be stacked.

The positive electrode 111 may include a positive electrode current collecting layer 111a and a positive electrode active material layer 111b disposed on both surfaces of the positive electrode current collecting layer 111a.

The positive electrode current collecting layer 111a may have a plate shape or a foil shape. The positive electrode current collecting layer 111a may include one of aluminum (Al), indium (In), copper (Cu), magnesium (Mg), stainless steel (SUS), titanium (Ti), iron (Fe), cobalt (Co), nickel (Ni), zinc (Zn), germanium (Ge), and lithium (Li).

The positive electrode active material layer 111b may be formed by coating on both surfaces of the positive electrode current collecting layer 111a. However, it is not necessarily limited thereto and may be formed using various methods such as transcription. The positive electrode active material layer 111b may include one of lithium salts such as lithium nickel cobalt manganese oxide (NCM), lithium cobalt oxide (LCO), lithium nickel oxide, lithium nickel cobalt oxide, lithium nickel cobalt aluminosilicate (NCA), lithium manganate, and lithium iron phosphate, nickel sulfide, copper sulfide, lithium sulfur, iron oxide, and vanadium oxide.

The negative electrode 113 may include a negative electrode current collecting layer 113a and a negative electrode coating layer 113b disposed on one surface of the negative electrode current collecting layer 113a. The negative electrode coating layer 113b may be disposed between the negative electrode current collecting layer 113a and the solid electrolyte layer 112.

The negative electrode current collecting layer 113a may have a plate shape or a foil shape. The negative electrode current collecting layer 113a may include various known metals and compounds that do not react with lithium. The negative electrode current collecting layer 113a may include one of stainless steel (SUS), copper (Cu), titanium (Ti), iron (Fe), cobalt (Co), and nickel (Ni).

The negative electrode coating layer 113b may include silver (Ag) and carbon (C), but is not limited thereto. For example, the negative electrode coating layer 113b may have a structure in which particles formed of a metal or semiconductor including at least one of gold (Au), platinum (Pt), palladium (Pd), silicon (Si), silver (Ag), aluminum (Al), bismuth (Bi), tin (Sn), and zinc (Zn) are contained in a carbon layer including at least one of carbon black (CB), furnace black (FB), acetylene black (AB), ketjen black (KB), and graphene. When the all-solid rechargeable battery is charged, lithium is precipitated between the negative electrode current collecting layer 113a and the negative electrode coating layer 113b to form a lithium metal layer between the negative electrode current collecting layer 113a and the negative electrode coating layer 113b, and after the all-solid rechargeable battery is discharged, the lithium precipitated between the negative electrode current collecting layer 113a and the negative electrode coating layer 113b is removed, so that the negative electrode current collecting layer 113a and the negative electrode coating layer 113b may come into direct contact. As described above, the thickness of the negative electrode 113 may change during charging and discharging of the all-solid rechargeable battery, and the change in the thickness of the negative electrode 113 may change the pressure applied to the solid electrolyte layer 112, thereby causing stress to occur in the solid electrolyte layer 112.

The solid electrolyte layer 112 may be disposed between the positive electrode 111 and the negative electrode 113. That is, the solid electrolyte layer 112 may be disposed between the positive electrode active material layer 111b and the negative electrode coating layer 113b.

The solid electrolyte layer 112 may include various known sulfide-based solid electrolyte materials, but is not limited thereto. For example, the solid electrolyte layer 112 may include Li2S-P2S5, Li2S-P2S5-LiX (X is a halogen element, for example, I, Cl), Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-P2S5-ZmSn (m, n are positive numbers, and Z is one of Ge, Zn, or Ga), Li2S-GeS2, Li2S-SiS2-Li3PO4, Li2S-SiS2-LipMOq (p, q are positive numbers, and M is one of P, Si, Ge, B, Al, Ga, In), or the like

The solid electrolyte layer 112 include at least one of an amorphous material and a crystalline material.

In the present embodiment, the unit cell 110 is described as a unit cell having a bi-cell structure in which the positive electrode active material layer 111b, the solid electrolyte layer 112, and the negative electrode 113 are sequentially stacked on both surfaces of the positive current collecting layer 111a based on the positive current collecting layer 111a, but is not necessarily limited thereto, and a unit cell 110 having a mono-cell structure in which the positive electrode active material layer 111b, the solid electrolyte layer 112, and the negative electrode 113 are sequentially stacked on one surface

of the positive current collecting layer 111a is also possible. Here, the upper and lower positional relationships are set based on the Z direction.

The first elastic member 120 may be made of an elastic material such as rubber, elastomer, or foam. The foam may include a urethane foam having a closed cell structure.

The pouch member 130 may accommodate a plurality of unit cells 110 and a plurality of first elastic members 120 therein. The pouch member 130 may accommodate the plurality of unit cells 110 and the plurality of first elastic members 120 therein to seal them in the accommodated state, thereby blocking external air from entering the plurality of unit cells 110. The pouch member 130 is formed by air-tightly bonding the edges of a pair of pouch sheets with an insulating resin containing a thermosetting polymer applied to its inner surface, so as to accommodate the plurality of unit cells 110 and the plurality of first elastic members 120.

The second elastic member 200 may be disposed between the adjacent all-solid cells 100.

The second elastic member 200 may be made of an elastic material such as rubber, elastomer, or foam. The foam may include a urethane foam having a closed cell structure.

The outer body 300 may accommodate the plurality of all-solid cells 100, the second elastic member 200, and the third elastic member 400 therein. The outer body 300 may be made of a laminate film or a material having rigidity. The outer body 300 may include a first outer body 310 disposed at the uppermost portion of the plurality of stacked all-solid cells 100, and a second outer body 320 disposed at the lowermost portion of the plurality of stacked all-solid cells 100.

The third elastic member 400 may be positioned between the outermost all-solid cell 110t disposed at the outermost of the plurality of all-solid cells 100 and the exterior body 300. The third elastic member 400 may include a third upper elastic member 410 disposed between the outermost all-solid cell 110t and the first outer body 310, and a third lower elastic member 420 disposed between the outermost all-solid cell 110t and the second outer body 320.

The third elastic member 400 may be made of an elastic material such as rubber, elastomer, or foam. The foam may include a urethane foam having a closed cell structure. Because the third elastic member 400 acts as a pressing member that improves the the close contacting property of the all-solid cell 100, a separate pressing device is not required. Therefore, the total weight of the all-solid rechargeable battery may be reduced, and the energy density of the all-solid rechargeable battery may be improved.

Here, the compressive strengths of the first elastic member 120, the second elastic member 200, and the third elastic member 400 may be different from each other. That is, when the compressive strength of the first elastic member 120 is P1, the compressive strength of the second elastic member 200 is P2, and the compressive strength of the third elastic member 400 is P3, the compressive strength of the elastic members 120, 200, and 400 may be expressed by Equation 1 below.

[Equation 1]

$$P1 < P2 < P3$$

For example, if the compression ratio is 10% compared to the initial thickness, P1 may be 2 MPa, P2 may be 2.5 MPa, and P3 may be 3 MPa.

Here, the compressive strength (MPa) is a value in compression force deflection (CFD), and represents the compressive strength when the elastic layer is physically compressed by 10%. The load is obtained after compressing the specimen to 10% of the original thickness at a compression ratio of 0.6 mm/min using a compression tester, and is calculated using Equation 2 below.

$$\text{Compressive strength (MPa)} = [\text{Load (kgf) at 10\% compression}]/[\text{Area of test piece } (cm^2)] \times 0.1 \qquad \text{[Equation 2]}$$

Particularly, based on a compression ratio of 10%, P2:P3 may be 1:1 to 3. In addition, the second elastic member 200 may have a compression ratio of 5 to 20% when P2 is 2 to 4 MPa, and the third elastic member 400 may have a compression ratio of 5 to 15% when P3 is 2 to 4 MPa. In addition, the static use limit of the elastic member refers to the compressive strength when the elastic member is compressed to stop or compressed for a long time. The static use limit of the second elastic member 200 may be 3 MPa at a compression ratio of 13% or less, and the static use limit of the third elastic member 400 may be 6 MPa at a compression ratio of 13% or less. The dynamic load of the elastic member refers to the compressive strength when the compression ratio of the elastic member is continuously changed. The dynamic load of the second elastic member 200 may be 9 MPa at a compression ratio of 16% or less, and the dynamic load of the third elastic member 400 may be 9 MPa at a compression ratio of 16% or less.

As described above, by differently controlling the compressive strengths of the first elastic member 120, the second elastic member 200, and the third elastic member 400, the pressure applied to the solid electrolyte layer 112 when the all-solid cell 100 is pressurized may be made uniform, and the pressure applied to the solid electrolyte layer 112 when

the all-solid cell 100 is pressurized may be made uniform. Therefore, the stress applied to the solid electrolyte layer 112 may be minimized, thereby preventing damage to the solid electrolyte layer 112.

In addition, when the resilience of the first elastic member 120 is R1, the resilience of the second elastic member 200 is R2, and the resilience of the third elastic member 400 is R3, the resilience of the elastic members 120, 200, and 400 may be expressed by Equation 3 below.

[Equation 3]

$$R1 < R2 < R3$$

Here, the resilience (%) may be measured as a ratio of stress at an initial point after compression to an initial stacked thickness. It is calculated using Equation 4 below.

Resilience ratio (%) = (Stress at 2 MPa point after additional CFD 10% compression after compression up to 2 MPa)/(2 MPa) × 100 [Equation 4]

In addition is, when the thickness of the first elastic member 120 is T1, the thickness of the second elastic member 200 is T2, and the thickness of the third elastic member 400 is T3, the compressive strength of the elastic members 120, 200, and 400 may be expressed by Equation 5 below.

[Equation 5]

$$T1 < T2 < T3$$

As described above, an all-solid rechargeable battery according to the embodiment includes the first elastic member 120 alternately stacked with unit cells 110, the second elastic member 200 disposed between the all-solid cells 100, and the third elastic member 400 disposed between the outermost all-solid cells 110t and the outer body 300, and the compressive strengths of the first elastic member 120, the second elastic member 200, and the third elastic member 400 are differently controlled, thereby making it possible to uniform the pressure applied to the solid electrolyte layer 112 when the all-solid cells 100 are pressurized. Therefore, the stress applied to the solid electrolyte layer 112 may be minimized, thereby preventing damage to the solid electrolyte layer 112.

Therefore, by preventing a short circuit between the positive electrode 111 and the negative electrode 113 disposed on both sides of the solid electrolyte layer 112, the defect rate of the all-solid rechargeable battery may be reduced and the performance may be improved.

In addition, by uniformly applying pressure to the solid electrolyte layer 112 when pressurizing the all-solid cell 100, the discharge efficiency may be improved.

Meanwhile, the second elastic member 200 and the third elastic member 400 have an adhesive strength of 30 to 1000 gf/inch based on 180-degree peeling strength (that is, when peeling speed is 300 mm/min), and thus may have adhesive properties. To this end, the second elastic member 200 and the third elastic member 400 themselves may be made of an adhesive material, or an adhesive material may be transferred to the surfaces of the second elastic member 200 and the third elastic member 400.

Here, the peel strength is defined as the adhesive strength of the adhesive layer laminated to the elastic sheet, and may be measured at a speed of 300 mm/min in the 180-degree direction by laminating a PET film to the elastic sheet.

In addition, when the thermal conductivity of the first elastic member 120 is H1, the thermal conductivity of the second elastic member 200 is H2, and the thermal conductivity of the third elastic member 400 is H3, the resilience of the elastic members 120, 200, and 400 may be expressed by Equation 6 below.

[Equation 6]

$$H1 > H2 > H3$$

Here, the thermal conductivity (w/mk) is defined as the thermal conductivity of the elastic sheet, and an example of measuring the thermal conductivity is as follows.

The elastic sheet is manufactured as a specimen with a size of 2 cm x 2 cm (width x length), and the horizontal thermal conductivity may be measured using TPS2200 (manufacturer: Hot Disk) according to ISO22007-2, and the vertical thermal conductivity may be measured using TIM-1300 (manufacturer: Analysis Tech) according to ASTM5470.

Therefore, since the first elastic member 120 has a thermal conductivity of 0.6 to 4 w/mk at 25°C, the first elastic member 120 may have heat dissipation properties. Accordingly, heat generated inside the all-solid cell may be easily discharged to the outside to prevent damage to the all-solid cell due to heat.

In addition, since the second elastic member 200 and the third elastic member 400 have a thermal conductivity of 0.01 to 0.4 W/mk at 25°C, the second elastic member 200 and the third elastic member 400 may have heat insulation properties. Therefore, heat transfer between adjacent all-solid cells may be minimized, thereby preventing damage to adjacent all-solid cells due to heat generated from some all-solid cells.

Here, the heat dissipation properties and heat insulation properties of the elastic members 120, 200, and 400 may be controlled by controlling the amount of filler injected into the foam material.

Meanwhile, in the above embodiment, the characteristics of the second elastic member 200 and the third elastic member 400 are different, but a structure in which the characteristics of the second elastic member 200 and the third elastic member 400 are the same is also possible.

That is, the compressive strength P2 of the second elastic member 200 and the compressive strength P3 of the third elastic member 400 may be the same, the magnitude R2 of the resilience of the second elastic member 200 and the magnitude R3 of the resilience of the third elastic member 400 may be the same, the thickness T2 of the second elastic member 200 and the thickness T3 of the third elastic member 400 may be the same, and the thermal conductivity H2 of the second elastic member 200 and the thermal conductivity H3 of the third elastic member 400 may be the same.

While this disclosure has been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

## Claims

**1.** An all-solid rechargeable battery comprising:

a plurality of all-solid cells in which a unit cell including a positive electrode, a solid electrolyte layer, and a negative electrode and a first elastic member are stacked;
a second elastic member disposed between the adjacent all-solid cells;
an outer body accommodating the plurality of all-solid cells and the second elastic member; and
a third elastic member disposed between an outermost all-solid cell disposed at an outermost end of the plurality of all-solid cells and the outer body,
wherein compressive strengths of the first elastic member and the second elastic member are different from each other.

**2.** The all-solid rechargeable battery as claimed in claim 1, wherein
the compressive strengths of the first elastic member, the second elastic member, and the third elastic member are different from each other.

**3.** The all-solid rechargeable battery as claimed in claim 2, wherein
when a compressive strength of the first elastic member is P1, a compressive strength of the second elastic member is P2, and a compressive strength of the third elastic member is P3,

$$P1 < P2 < P3$$

is satisfied.

**4.** The all-solid rechargeable battery as claimed in claim 3, wherein
when a magnitude of resilience of the first elastic member is R1, a magnitude of resilience of the second elastic member is R2, and a magnitude of resilience of the third elastic member is R3,

$$R1 < R2 < R3$$

is satisfied.

**5.** The all-solid rechargeable battery as claimed in claim 4, wherein

when a thickness of the first elastic member is T1, a thickness of the second elastic member is T2, and a thickness of the third elastic member is T3,

$$T1 < T2 < T3$$

is satisfied.

**6.** The all-solid rechargeable battery as claimed in claim 2, wherein
the second elastic member and the third elastic member have an adhesive strength of 30 to 1000 gf/inch based on a 180-degree peel strength (measurement speed 300 mm/min).

**7.** The all-solid rechargeable battery as claimed in claim 2, wherein

the first elastic member has a thermal conductivity of 0.6 to 4 W/mk at 25°C, and
the second elastic member and the third elastic member have a thermal conductivity of 0.01 to 0.4 W/mk at 25°C.

**8.** The all-solid rechargeable battery as claimed in claim 1, wherein
the compressive strengths of the second elastic member and the third elastic member are the same.

**9.** The all-solid rechargeable battery as claimed in claim 1, wherein
the all-solid cell further includes a pouch member that accommodates the unit cell and the first elastic member.

FIG. 1

1000
50
21
20
23
30
43
40
41
50

FIG. 2

1000
50
21
20
23
30
45
40'
44
41
50

FIG. 3

A
410
310
T3
T1
120
113
112
111
112
113
110
110t
120
130
T2
200
120
113
112
111
112
113
110
120
130
200
120
113
112
111
112
113
110
120
130
200
120
113
112
111
112
113
110
120
130
300
310
320
400
410
420
110t
420
320
Z
Y
X

FIG. 4

T1
410
130
120
112
112
120
113a
113b
113
111b
111a
111
111b
113b
113a
113
Z
Y
X

**INTERNATIONAL SEARCH REPORT**

International application No. **PCT/KR2024/095668**

**A. CLASSIFICATION OF SUBJECT MATTER**

**H01M 50/242**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 50/242(2021.01); H01M 10/052(2010.01); H01M 10/0585(2010.01); H01M 2/10(2006.01); H01M 50/103(2021.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all solid state battery), 탄성 부재(elastic member), 압축(compression), 강도(strength)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0052032 A (SAMSUNG SDI CO., LTD.) 27 April 2022 (2022-04-27) See paragraphs [0024]-[0116] and figures 1-2. | 1-9 |
| A | KR 10-2023-0120926 A (SAMSUNG SDI CO., LTD.) 17 August 2023 (2023-08-17) See paragraph [0022] and figure 1. | 1-9 |
| A | KR 10-2023-0137700 A (SAMSUNG SDI CO., LTD.) 05 October 2023 (2023-10-05) See paragraphs [0043]-[0068] and figure 1. | 1-9 |
| A | KR 10-2021-0136834 A (SAMSUNG SDI CO., LTD.) 17 November 2021 (2021-11-17) See paragraphs [0059]-[0064] and figure 3. | 1-9 |
| A | US 2021-0020995 A1 (HONDA MOTOR CO., LTD.) 21 January 2021 (2021-01-21) See paragraphs [0027]-[0076] and figure 1. | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2024** | **14 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/095668**

| Patent document cited in search report | Publication date (day/month/year) | Patent family member(s) | Publication date (day/month/year) |
|---|---|---|---|
| KR 10-2022-0052032 A | 27 April 2022 | EP 3989322 A1 | 27 April 2022 |
| | | JP 2022-067647 A | 06 May 2022 |
| | | JP 2024-045773 A | 02 April 2024 |
| | | JP 7494157 B2 | 03 June 2024 |
| | | US 2022-0123369 A1 | 21 April 2022 |
| KR 10-2023-0120926 A | 17 August 2023 | US 2023-0307792 A1 | 28 September 2023 |
| | | WO 2023-153582 A1 | 17 August 2023 |
| KR 10-2023-0137700 A | 05 October 2023 | CN 116799322 A | 22 September 2023 |
| | | EP 4250407 A1 | 27 September 2023 |
| | | US 2023-0307659 A1 | 28 September 2023 |
| KR 10-2021-0136834 A | 17 November 2021 | CN 115552686 A | 30 December 2022 |
| | | EP 4148858 A1 | 15 March 2023 |
| | | JP 2021-177448 A | 11 November 2021 |
| | | US 2023-0187685 A1 | 15 June 2023 |
| | | WO 2021-225346 A1 | 11 November 2021 |
| US 2021-0020995 A1 | 21 January 2021 | CN 112005420 A | 27 November 2020 |
| | | JP 7148600 B2 | 05 October 2022 |
| | | WO 2019-189007 A1 | 03 October 2019 |

Form PCT/ISA/210 (patent family annex) (July 2022)